# EUROPÄISCHE PATENTSCHRIFT

(11) **EP 2 047 659 B1**
(45) Veröffentlichungstag und Bekanntmachung des Hinweises auf die Patenterteilung: **08.04.2015**
(21) Anmeldenummer: 07730047.3
(22) Anmeldetag: 11.06.2007
(51) Int. Cl.: H04L 29/08, H04H 20/06, H04H 20/62, H04H 60/40, H04H 60/92

(54) **VERFAHREN ZUM WEITERLEITEN EINER AUDIOVISUELLEN SEQUENZ, VERFAHREN ZUM EMPFANGEN DER AUDIOVISUELLEN SEQUENZ UND ENTSPRECHENDES SYSTEM**
METHOD FOR FORWARDING AN AUDIOVISUAL SEQUENCE, METHOD FOR RECEIVING SAID AUDIOVISUAL SEQUENCE, AND CORRESPONDING SYSTEM
PROCÉDÉ DE TRANSMISSION D'UNE SÉQUENCE AUDIOVISUELLE, PROCÉDÉ DE RÉCEPTION D'UNE SÉQUENCE AUDIOVISUELLE ET SYSTÈME CORRESPONDANT

(30) Priorität: 25.07.2006 DE 102006034406
(43) Veröffentlichungstag der Anmeldung: 15.04.2009
(73) Patentinhaber: Robert Bosch GmbH, 70442 Stuttgart (DE)
(72) Erfinder: LIETZ, Stephan, 31162 Bad Salzdetfurth (DE)
(86) Internationale Anmeldenummer: PCT/EP2007/055705
(87) Internationale Veröffentlichungsnummer: WO 2008/012137

(56) Entgegenhaltungen:
- WO-A-02/19578
- GB-A- 2 396 784
- US-B1- 6 223 027
- US-B1- 6 407 673

## Beschreibung

### Stand der Technik

Die vorliegende Erfindung betrifft ein Verfahren zum Weiterleiten einer audiovisuellen Sequenz an eine mobile Einheit, ein Verfahren zum Empfangen der audiovisuellen Sequenz durch die mobile Einheit und ein entsprechendes System.

Mobile Einheiten, die in Fahrzeugen integriert sind, können auf unterschiedliche Weise audiovisuelle Sequenzen, d.h. Datensequenzen, die dafür vorgesehen sind, durch geeignete Geräte auditiv und/oder visuell dargestellt zu werden, über Ausstrahlungen durch terrestrische Antennen oder Satelliten empfangen. Befinden sich die Fahrzeuge in Bewegung, können sich die Empfangsbedingungen jedoch erheblich verschlechtern. Um dennoch einen befriedigenden Empfang der audiovisuellen Sequenzen durch die mobilen Einheiten zu gewährleisten, wurden verschiedene Lösungen vorgeschlagen, wie z.B. verbesserte Modulationsarten, Mehrfachausstrahlung und Forward Error Correction. Diese Lösungen versagen aber bei besonders hohen Fahrzeuggeschwindigkeiten und beträchtlichen Abschattungen, wie sie für Hochgeschwindigkeitszüge aufgrund von Oberleitungen typisch sind. Dann können Füllsender oder Repeater eingesetzt werden, um eine befriedigende Darstellung zu gewährleisten. Das Vorsehen von Füllsendern oder Repeatern ist aber aus technischer Sicht aufwendig und daher teuer.

Das US-Patent US 6,407,673 B1 zeigt eine Technik zur Übermittlung von Multimedia-Daten an einen mobilen Empfänger. Zur Übermittlung der in einer Speichereinrichtung bereitgehaltenen Multimedia-Daten sind mehrere Verteilungszentren entlang einer Strecke installiert, auf der sich mobile Empfänger bewegt.

### Offenbarung der Erfindung

Der vorliegenden Erfindung liegt die Aufgabe zugrunde, eine Technik zum Weiterleiten einer audiovisuellen Sequenz an eine mobile Einheit zu schaffen.

Die der Erfindung zugrunde liegende Aufgabe wird durch ein Verfahren zum Weiterleiten einer audiovisuellen Sequenz an eine mobile Einheit nach Anspruch 1, eine stationäre Einheit nach Anspruch 6 und ein System nach Anspruch 7 gelöst. Unteransprüche geben Ausgestaltungen wider.

Die Erfindung betrifft ein Verfahren zum Weiterleiten einer audiovisuellen Sequenz an eine mobile Einheit mit folgenden Schritten:
- Empfangen einer audiovisuellen Sequenz durch eine erste und eine zweite stationäre Einheit;
- Speichern der audiovisuellen Sequenz in der ersten und der zweiten stationären Einheit;
- Senden eines ersten Ausschnitts der audiovisuellen Sequenz von der ersten stationären Einheit an die mobile Einheit;
- Bestimmen einer Endzeit des ersten Ausschnitts auf der Grundlage der Zeitbasis der stationären Einheit durch die erste stationäre Einheit;
- Synchronisieren von Zeitbasen der ersten und der zweiten stationären Einheit;
- Wählen eines zweiten Ausschnitts der audiovisuellen Sequenz durch die zweite stationäre Einheit auf der Basis der Endzeit des ersten Abschnitts; und
- Senden des zweiten Ausschnitts der audiovisuellen Sequenz von der zweiten stationären Einheit an die mobile Einheit.

Vorteilhafterweise können mehrere audiovisuelle Sequenzen gleichzeitig von der stationären Einheit empfangen und weitergeleitet werden.

Vorteilhafterweise können zeitlich aufeinanderfolgende Ausschnitte problemlos zusammengesetzt werden oder zur Übertragung an die mobile Einheit ausgewählt werden, da die Zeitbasen der stationären Einheit und der weiteren stationären Einheit synchronisiert sind.

Vorteilhafterweise können genau die Ausschnitte an die mobile Einheit übertragen werden, welche in der mobilen Einheit zur Fortsetzung der Wiedergabe von audiovisuellen Sequenzen erforderlich sind.

In einer alternativen Weiterbildung wird der weitere Ausschnitt der audiovisuellen Sequenz so ausgewählt, daß eine Anfangszeit des weiteren Ausschnitts zeitlich vor der Endzeit des Ausschnitts liegt.

Vorteilhafterweise ist keine Datenübertragung von der mobilen Einheit an die stationäre Einheit erforderlich.

In einer bevorzugten Ausführungsform der Erfindung empfängt die mobile Einheit eine Endzeit des Ausschnitts der audiovisuellen Sequenz von der stationären Einheit, sendet die mobile Einheit die Endzeit an die weitere stationäre Einheit, und ist der weitere Ausschnitt so ausgewählt, daß er zur Endzeit des Ausschnitts beginnt.

Vorteilhafterweise können audiovisuelle Sequenzen einfach durch das Aneinanderhängen von Ausschnitten zusammengesetzt werden und wird die Menge der zu übertragenden Daten minimiert.

In einer weiteren bevorzugten Ausführungsform werden bei dem Bereitstellen von Daten des Ausschnitts und des weiteren Ausschnitts Daten weggelassen oder Pausendaten eingefügt.

Vorteilhafterweise wird somit sichergestellt, daß ein Zeitversatz zwischen dem Empfang audiovisueller Sequenzen in den stationären Einheiten und deren Bereitstellung zur Wiedergabe in der mobilen Einheit konstant ist.

Ferner betrifft die vorliegende Erfindung eine stationäre Einheit mit:
- einer Empfangseinheit zum Empfangen einer audiovisuellen Sequenz;
- einer Speichereinheit zum Speichern der audiovisuellen Sequenz;
- einer Zeitbasis;
- einem Transceiver zur Synchronisation der Zeitbasis mit einer weiteren stationären Einheit;
- einer Empfangseinheit zum Empfangen einer Endzeit eines von der weiteren stationären Einheit an eine mobile Einheit übermittelten ersten Ausschnitts der audiovisuellen Sequenz;
- einer Steuerungseinheit zum Wählen eines zweiten Ausschnitts der audiovisuellen Sequenz auf der Basis der Endzeit des ersten Abschnitts, und
- einer Sendeeinheit zum Senden der audiovisuellen Sequenz an die mobile Einheit.

Ferner betrifft die vorliegende Erfindung ein System mit einer mobilen Einheit und wenigstens zwei der obigen stationären Einheiten.

### Kurze Beschreibung der Zeichnungen

Im folgenden wird die Erfindung mit Bezugnahme auf die Zeichnung näher beschrieben. Es zeigt:

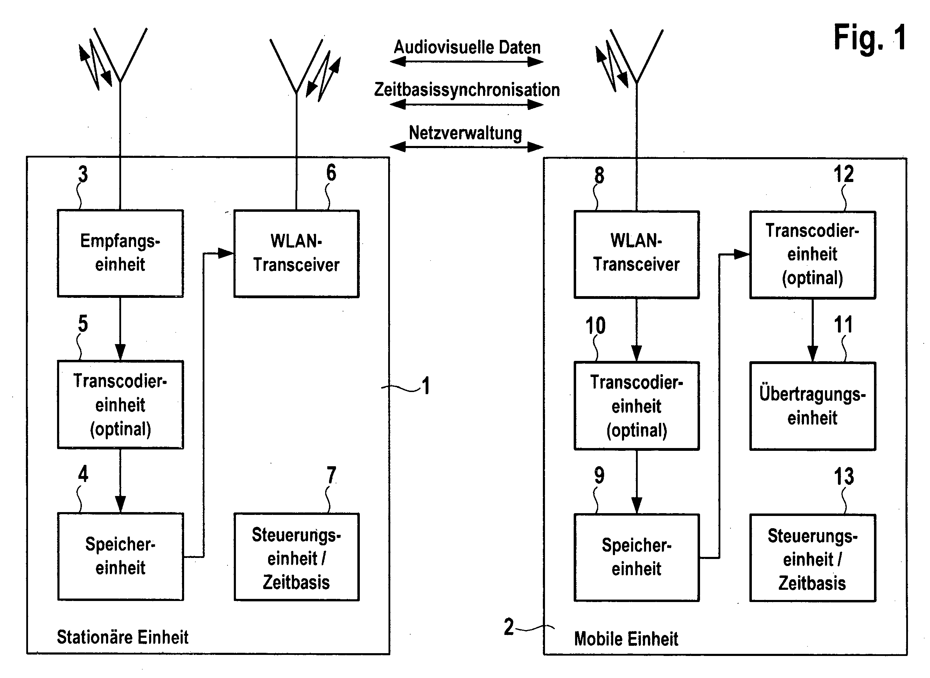

FIG. 1 eine schematische Ansicht eines Systems zur audiovisuellen Sequenzübertragung an eine mobile Einheit.

### Ausführungsformen der Erfindung

FIG. 1 zeigt eine schematische Ansicht eines Systems zur audiovisuellen Sequenzübertragung an eine mobile Einheit. Ein solches System ist besonders geeignet für die ausschnittsweise Übertragung von mehreren gleichzeitig ausgestrahlten Fernsehprogrammen und Hörprogrammen von einer stationären Einheit 1, die beispielsweise in einem Bahnhof installiert ist, an eine mobile Einheit 2, die in einem Zug installiert ist, und wird im folgenden mit Bezug auf diese Anwendung beschrieben.

Eine Empfangseinheit 3 empfängt fortwährend mehrere audiovisuelle Sequenzen (mehrere ausgestrahlte Fernsehprogramme und Hörfunkprogramme) beispielsweise über eine Antenne (wie dargestellt) oder einen Kabelanschluß. Die audiovisuellen Sequenzen werden dann fortwährend in einem Speicher 4 zusammen mit einer zugehörigen kontinuierlichen Zeit, wie der Empfangszeit, welche durch eine interne Zeitbasis einer Steuerungseinheit 7 bestimmt wird, gespeichert. Die Zeitbasis wird über den Empfang von über Funk abgestrahlte Zeitsignale kontinuierlich adjustiert. Optional können die Daten der audiovisuellen Sequenzen vor dem Speichern durch eine Transcodiereinheit 5 zum Beispiel durch Umwandeln eines MPEG2-Formats in ein MPEG-4-Format komprimiert werden.

Wenn der Zug in einen Bahnhof eingefahren ist und zum Stehen kommt, gibt eine Steuerungseinheit 13 der mobilen Einheit einen Befehl zum Aussenden eines Sendestartsignals über einen WLAN-Transceiver 8 der mobilen Einheit 1. Auf den Empfang des Sendestartsignals durch einen WLAN-Transceiver 6 der stationären Einheit 1 hin startet die Steuerungseinheit 7 das Aussenden von Ausschnitten mehrerer audiovisueller Sequenzen, welche gleichzeitig empfangen wurden und in der Speichereinheit 4 gespeichert sind, mit der zugehörigen kontinuierlichen Zeit über den WLAN-Transceiver 6. Das Sendestartsignal kann auch Information darüber enthalten, zu welchem Zeitpunkt der Zeitbasis 7 der stationären Einheit 1 die Ausschnitte beginnen sollen. Diese Information ergibt sich aus einer Endzeit von Ausschnitten, die an die mobile Einheit 2 während einer Übertragung beim vorhergehenden Halt des Zugs gesendet wurden.

In der mobilen Einheit 2 des Zugs werden die Ausschnitte von dem WLAN-Transceiver 8 empfangen und in einer Speichereinheit 9 gespeichert. Das Format der Ausschnitte kann vor dem Speichern in der Transcodiereinheit 10 geändert werden. Die ausschnittsweise in der Speichereinheit 9 gespeicherten audiovisuellen Sequenzen werden durch eine Übertragungseinheit 11 zeitversetzt zum ursprünglichen Empfang in Echtzeit in ein Netzwerk eingespeist, an welches Ausgabeeinheiten wie Fernsehgeräte oder Radiogeräte angeschlossen werden können. Der Takt, mit dem die Einspeisung abläuft, wird dabei durch eine Zeitbasis der Steuerungseinheit 13 der mobilen Einheit 2 bestimmt. Das Format der Ausschnitte kann optional auch vor der Weiterleitung zu der Übertragungseinheit 11 in der Transcodiereinheit 12 geändert werden.

Die Zeitbasis der mobilen Einheit 2 kann von der Zeitbasis der stationären Einheit 1 abweichen. Diese Abweichungen der beiden Zeitbasen werden Zeitsignale von der stationären Einheit 2 über die WLAN-Transceiver 6 und 8 erfaßt und die Abweichungen können durch eine Synchronisation behoben werden, um die Abweichungen nicht zu groß werden zu lassen. Falls die Zeitbasis der mobilen Einheit 2 langsamer läuft als die Zeitbasis der stationären Einheit 1, kann es dann notwendig sein, bei der Einspeisung Daten wegzulassen, die zu gewissen Zeitintervallen der audiovisuellen Sequenzen gehören, um den zeitlichen Versatz zwischen den Daten, die von der stationären Einheit empfangen werden, und den Daten, die von der mobilen Einheit eingespeist werden, nicht zu groß werden zu lassen und sicherzustellen, daß die eingespeisten Daten möglichst aktuell sind. Falls die Zeitbasis der mobilen Einheit 2 schneller läuft als die Zeitbasis der stationären Einheit außerhalb des Zugs, kann es dann notwendig sein, Pausendaten in die audiovisuellen Sequenzen einzufügen, um den zeitlichen Versatz der im Zug ausgesendeten Daten nicht zu klein werden zu lassen, denn der zeitliche Versatz zwischen den in das Netzwerk des Zugs eingespeisten Daten und den durch die stationäre Einheit empfangenen Daten muß mindestens so groß sein wie die maximale Fahrtzeit zwischen zwei Halts, um eine kontinuierliche Einspeisung sicherzustellen. Zum Weglassen und Einfügen kann ein intelligenter Algorithmus verwendet werden, der Pausen bei Szenenwechseln und Werbeblöcken erkennt und diese verlängert bzw. kürzt. Das Weglassen oder Einfügen kann aber auch dann durchgeführt werden, wenn der Zug keine Passagiere (z.B. nach dem letzten Halt) hat.

Statt durch ein Sendestartsignal kann das Aussenden der Ausschnitte auch durch einen Steuerungsbefehl an die Steuerungseinheit 7 der stationären Einheit 2 ausgelöst werden, der beispielsweise von einem Bahnhofsbediensteten durch Knopfdruck ausgegeben wird. Alternativ können auch Ausschnitte, die eine feste Zeitspanne umfassen, periodisch von einer Sendeeinheit ausgesendet werden. Die Periode kann dabei so bemessen sein, daß ein im Bahnhof haltender Zug einen vollständigen Ausschnitt empfangen kann, wobei der Ausschnitt ein Zeitintervall umfaßt, das der maximalen Fahrtzeit zwischen zwei aufeinanderfolgenden Halts entspricht. Dann kann eine reine Sendeeinheit statt einer Sende- und Empfangseinheit (WLAN-Transceiver) 6 und eine reine Empfangseinheit statt einer Sende- und Empfangseinheit (WLAN-Transceiver) 8 verwendet werden. Statt über Funk kann die Übertragung der Ausschnitte auch über eine elektrische, optische oder magnetische Kommunikationsstrecke von der stationären Einheit 2 zu der mobilen Einheit 1 erfolgen.

Nach einem kurzen Halt von typischerweise ungefähr 2 Minuten im Bahnhof fährt der Zug weiter. Beim Halt des Zugs im nächsten Bahnhof werden weitere Ausschnitte von einer weiteren stationären Einheit an die mobile Einheit 2 im Zug auf gleiche Weise wie von der stationären Einheit 1 übertragen. Die weitere stationäre Einheit ist mit der vorhergehenden stationären Einheit dabei dadurch synchronisiert, daß die stationäre Einheit 1 und die weitere stationäre Einheit die gleichen Zeitsignale zur Synchronisation über Funk empfangen. Da die von der stationären Einheit 1 und der weiteren stationäre Einheit empfangenen audiovisuellen Sequenzen sowohl von der stationären Einheit 1 als auch von der weiteren stationären Einheit mit der gleichen Zeitbasis versehen werden, können die Ausschnitte die von der weiteren stationären Einheit an die mobile Einheit 1 übertragen werden leicht ausgewählt werden oder in der mobilen Einheit mit vorher übertragene Ausschnitten zusammengefügt werden, ohne daß es zu Wiederholungen kommt.

Die maximale Fahrzeit des Zugs zwischen aufeinanderfolgenden Halts an Bahnhöfen ist bekannt. Sie beträgt beispielsweise für einen Intercity-Express-Zug in Deutschland nicht mehr als 60 Minuten. Für die Kurzstreckenfunktechnologie Ultra Wide Band IEEE 802.15.3a sind Übertragungsraten von über 400 MBit/s möglich. Während einer typischen Haltzeit von 2 Minuten in einem Bahnhof können also 48 GBit (7,2 GByte) übertragen werden. Über die Fahrtzeit von einer Stunde verteilt ist für die stationäre Einheit also eine kontinuierliche Datenübertragungsrate von 13,3 MBit/s möglich. Zur Darstellung eines Fernsehprogramms in Echtzeit, welches in einem MPEG-4-Format kodiert ist, ist auf einem kleinen Fernsehdisplays (bis 8 Zoll) eine Datenübertragungsrate von 800 KBits/s und für ein großes Display eine Datenübertragungsrate von 1,5 MBit/s erforderlich. Es wäre also möglich, innerhalb einer typischen Haltzeit von 2 Minuten eine Versorgung mit 8 bis 16 vollwertigen Fernsehprogrammen sicherzustellen.

## Patentansprüche

1. Verfahren zum Weiterleiten einer audiovisuellen Sequenz an eine mobile Einheit (2) mit folgenden Schritten:
- Empfangen einer audiovisuellen Sequenz durch eine erste und eine zweite stationäre Einheit (1);
- Speichern der audiovisuellen Sequenz in der ersten und der zweiten stationären Einheit (1);
- Senden eines ersten Ausschnitts der audiovisuellen Sequenz von der ersten stationären Einheit (1) an die mobile Einheit (2);
- Bestimmen einer Endzeit des ersten Ausschnitts auf der Grundlage einer Zeitbasis der ersten stationären Einheit (1) durch die erste stationäre Einheit (1);
- Synchronisieren von Zeitbasen der ersten und der zweiten stationären Einheit;
- Wählen eines zweiten Ausschnitts der audiovisuellen Sequenz durch die zweite stationäre Einheit auf der Basis der Endzeit des ersten Abschnitts; und
- Senden des zweiten Ausschnitts der audiovisuellen Sequenz von der zweiten stationären Einheit (1) an die mobile Einheit (2).

2. Verfahren nach Anspruch 1, gekennzeichnet durch ein Senden der Endzeit des ersten Ausschnitts von der ersten stationären Einheit (1) an die mobile Einheit (2) und durch ein Senden der Endzeit des ersten Ausschnitts von der mobilen Einheit (2) an die zweite stationäre Einheit (1).

3. Verfahren nach Anspruch 1 oder 2, **dadurch gekennzeichnet, dass** der zweite Ausschnitt der audiovisuellen Sequenz so gewählt wird, dass er zur Endzeit des ersten Ausschnitts beginnt.

4. Verfahren nach einem der vorangehenden Ansprüche, **dadurch gekennzeichnet, dass** der zweite Ausschnitt der audiovisuellen Sequenz so gewählt wird, dass eine Anfangszeit des zweiten Ausschnitts zeitlich vor der Endzeit des ersten Ausschnitts liegt.

5. Verfahren nach Anspruch 4, **dadurch gekennzeichnet, dass** der zweite Ausschnitt der audiovisuellen Sequenz so gewählt wird, dass zwischen dem ersten Ausschnitt und dem zweiten Ausschnitt Daten weggelassen oder Pausendaten eingefügt werden.

6. Stationäre Einheit (1) mit:
- einer Empfangseinheit (3) zum Empfangen einer audiovisuellen Sequenz;
- einer Speichereinheit (4) zum Speichern der audiovisuellen Sequenz;
- einer Zeitbasis (7);
- einem Transceiver (6) zur Synchronisation der Zeitbasis (7) mit einer weiteren stationären Einheit (1);
- einer Empfangseinheit (6) zum Empfangen einer Endzeit eines von der weiteren stationären Einheit (1) an eine mobile Einheit (2) übermittelten ersten Ausschnitts der audiovisuellen Sequenz;
- einer Steuerungseinheit (7) zum Wählen eines zweiten Ausschnitts der audiovisuellen Sequenz auf der Basis der Endzeit des ersten Abschnitts
- einer Sendeeinheit (6) zum Senden des gewählten zweiten Ausschnitts der audiovisuellen Sequenz an die mobile Einheit (2);

7. System zum Weiterleiten einer audiovisuellen Sequenz, umfassend eine mobile Einheit (2) und wenigstens zwei stationären Einheiten (1), wobei die mobile Einheit (2) folgendes umfasst:
- eine Empfangseinheit (8) zum Empfangen von Ausschnitten einer audiovisuellen Sequenz von einer stationären Einheit nach Anspruch 6;
- eine Speichereinheit (9) zum Speichern der Ausschnitte;
- eine Übertragungseinheit (11) zum Bereitstellen von Daten des Ausschnitts in zeitlicher Reihenfolge; und
- eine Steuerungseinheit (13) zum Steuern des Bereitstellens der Daten in zeitlicher Reihenfolge,
und jede stationäre Einheit (1) folgendes umfasst:
- eine Empfangseinheit (3) zum Empfangen einer audiovisuellen Sequenz;
- eine Speichereinheit (4) zum Speichern der audiovisuellen Sequenz;
- eine Zeitbasis (13);
- einen Transceiver (6) zur Synchronisation der Zeitbasis (13) mit einer weiteren stationären Einheit (1);
- eine Sendeeinheit (6) zum Senden der audiovisuellen Sequenz an die mobile Einheit (2);
- eine Steuerungseinheit (7) zum Steuern des Sendens eines Ausschnitts der audiovisuellen Sequenz gemäß dem Verfahren nach einem der Ansprüche 1 bis 5.

## Claims

1. Method for forwarding an audiovisual sequence to a mobile unit (2), having the following steps:
- an audiovisual sequence is received by a first and a second fixed unit (1);
- the audiovisual sequence is stored in the first and second fixed units (1);
- a first clip from the audiovisual sequence is sent from the first fixed unit (1) to the mobile unit (2) ;
- an end time for the first clip is determined on the basis of a time base of the first fixed unit (1) by the first fixed unit (1);
- time bases of the first and second fixed units are synchronized;
- a second clip from the audiovisual sequence is selected by the second fixed unit on the basis of the end time of the first section; and
- the second clip from the audiovisual sequence is sent from the second fixed unit (1) to the mobile unit (2).

2. Method according to Claim 1, **characterized by** the end time of the first clip being sent from the first fixed unit (1) to the mobile unit (2) and by the end time of the first clip being sent from the mobile unit (2) to the second fixed unit (1).

3. Method according to Claim 1 or 2, **characterized in that** the second clip from the audiovisual sequence is selected such that it begins at the end time of the first clip.

4. Method according to one of the preceding claims, **characterized in that** the second clip from the audiovisual sequence is selected such that a start time for the second clip is chronologically before the end time of the first clip.

5. Method according to Claim 4, **characterized in that** the second clip from the audiovisual sequence is selected such that data are omitted, or pause data are inserted, between the first clip and the second clip.

6. Fixed unit (1) having:
- a reception unit (3) for receiving an audiovisual sequence;
- a memory unit (4) for storing the audiovisual sequence;
- a time base (7);
- a transceiver (6) for synchronizing the time base (7) to a further fixed unit (1);
- a reception unit (6) for receiving an end time for a first clip from the audiovisual sequence, which clip is transmitted from the further fixed unit (1) to a mobile unit (2);
- a control unit (7) for selecting a second clip from the audiovisual sequence on the basis of the end time of the first section;
- a transmission unit (6) for sending the selected second clip from the audiovisual sequence to the mobile unit (2).

7. System for forwarding an audiovisual sequence, comprising a mobile unit (2) and at least two fixed units (1), wherein the mobile unit (2) comprises the following:
- a reception unit (8) for receiving clips from an audiovisual sequence from a fixed unit according to Claim 6;
- a memory unit (9) for storing the clips;
- a transmission unit (11) for providing data from the clip in chronological order; and
- a control unit (13) for controlling the provision of the data in chronological order,
and each fixed unit (1) comprises the following:
- a reception unit (3) for receiving an audiovisual sequence;
- a memory unit (4) for storing the audiovisual sequence;
- a time base (13);
- a transceiver (6) for synchronizing the time base (13) to a further fixed unit (1);
- a transmission unit (6) for sending the audiovisual sequence to the mobile unit (2);
- a control unit (7) for controlling the sending of a clip from the audiovisual sequence on the basis of the method according to one of Claims 1 to 5.

## Revendications

1. Procédé pour transmettre une séquence audiovisuelle à une unité mobile (2), comprenant les étapes consistant à :
- recevoir une séquence audiovisuelle au moyen de première et seconde unités stationnaires (1) ;
- stocker la séquence audiovisuelle dans les première et seconde unités stationnaires (1) ;
- envoyer un premier extrait de la séquence audiovisuelle de la première unité stationnaire (1) à l'unité mobile (2) ;
- déterminer un temps de fin du premier extrait sur la base d'une base de temps de la première unité stationnaire (1) au moyen de la première unité stationnaire (1) ;
- synchroniser les bases de temps des première et seconde unités stationnaires ;
- sélectionner un second extrait de la séquence audiovisuelle au moyen de la seconde unité stationnaire sur la base du temps de fin du premier extrait ; et
- envoyer le second extrait de la séquence audiovisuelle de la seconde unité stationnaire (1) à l'unité mobile (2).

2. Procédé selon la revendication 1, **caractérisé par** l'envoi du temps de fin du premier extrait de la première unité stationnaire (1) à l'unité mobile (2) et par l'envoi du temps de fin du premier extrait de l'unité mobile (2) à la seconde unité stationnaire (1).

3. Procédé selon la revendication 1 ou 2, **caractérisé en ce que** le second extrait de la séquence audiovisuelle est sélectionné de telle sorte qu'il commence au temps de fin du premier extrait.

4. Procédé selon l'une quelconque des revendications précédentes, **caractérisé en ce que** le second extrait de la séquence audiovisuelle est sélectionné de telle sorte qu'un temps de début du second extrait soit antérieur au temps de fin du premier extrait.

5. Procédé selon la revendication 4, **caractérisé en ce que** le second extrait de la séquence audiovisuelle est choisi de telle sorte qu'entre le premier extrait et le second extrait, des données soient omises ou des données de pause soient insérées.

6. Unité stationnaire (1) comportant :
- une unité de réception (3) pour recevoir une séquence audiovisuelle ;
- une unité à mémoire (4) pour stocker la séquence audiovisuelle ;
- une base de temps (7) ;
- un émetteur-récepteur (6) pour synchroniser la base de temps (7) avec une autre unité stationnaire (1) ;
- une unité de réception (6) pour recevoir un temps de fin d'un premier extrait de la séquence audiovisuelle transmis de l'autre unité stationnaire (1) à une unité mobile (2) ;
- une unité de commande (7) pour sélectionner un second extrait de la séquence audiovisuelle sur la base du temps de fin du premier extrait ;
- une unité d'envoi (6) pour envoyer à l'unité mobile (2) le second extrait sélectionné de la seconde séquence audiovisuelle.

7. Système pour transmettre une séquence audiovisuelle comprenant une unité mobile (2) et au moins deux unités stationnaires (1), dans lequel l'unité mobile (2) comprend :
- une unité de réception (8) pour recevoir une séquence audiovisuelle d'extraits d'une unité stationnaire selon la revendication 6 ;
- une unité à mémoire (9) pour stocker les extraits ;
- une unité de transmission (11) pour fournir des données de l'extrait dans un ordre chronologique ; et
- une unité de commande (13) pour commander la fourniture des données dans l'ordre chronologique, et chaque unité stationnaire (1) comprend :
- une unité de réception (3) pour recevoir une séquence audiovisuelle ;
- une unité à mémoire (4) pour stocker la séquence audiovisuelle ;
- une base de temps (13) ;
- un émetteur-récepteur (6) pour synchroniser la base de temps (13) avec une autre unité stationnaire (1) ;
- une unité d'envoi (6) pour envoyer la séquence audiovisuelle à l'unité mobile (2) ;
- une unité de commande (7) pour commander l'envoi d'un extrait de la séquence audiovisuelle conformément au procédé selon l'une quelconque des revendications 1 à 5.
